# EUROPEAN PATENT SPECIFICATION

(11) **EP 4 567 991 B1**
(45) Date of publication and mention of the grant of the patent: **22.07.2026**
(21) Application number: 23898402.5
(22) Date of filing: 01.12.2023
(51) Int. Cl.: H01M 50/289, H01M 50/204, H01M 10/6556, H01M 10/613, H01M 50/264, H01M 10/659, H01M 50/207, H01M 50/262

(54) **BATTERY PACK**
BATTERIEPACK
BLOC-BATTERIE

(30) Priority: 02.12.2022 KR 20220167128; 17.03.2023 KR 20230035452
(43) Date of publication of application: 11.06.2025
(73) Proprietor: LG Energy Solution, Ltd., Seoul 07335 (KR)
(72) Inventor: LEE, Sang Yoon, Daejeon 34122 (KR); SHIN, Ju Hwan, Daejeon 34122 (KR); HUR, Nam Hoon, Daejeon 34122 (KR)
(74) Representative: Plasseraud IP
(86) International application number: PCT/KR2023/019736
(87) International publication number: WO 2024/117879

(56) References cited:
- EP-A1- 3 799 151
- CN-A- 114 447 498
- CN-U- 208 093 632
- CN-U- 213 636 194
- JP-A- 2014 044 884
- KR-A- 20190 000 211
- KR-A- 20210 017 273
- KR-A- 20220 065 601
- US-A1- 2018 287 227
- US-A1- 2020 212 397
- US-A1- 2021 351 455

## Description

### [Technical Field]

The present invention relates to a battery pack, wherein a base plate supporting a bottom of a cell assembly and a separation wall interposed between a pair of neighboring cell assemblies such that the cell assemblies are separated is screwed to the base plate by a coupling member.

This application claims the benefit of priority based on Korean Patent Application No. 10-2022-0167128, filed on December 02, 2022, and Korean Patent Application No. 10-2023-0035452, filed on March 17, 2023, and Korean Patent Application No. 10-2023-0172135, filed on December 01, 2023.

### [Background Art]

The types of secondary batteries include lithium ion batteries, lithium polymer batteries, nickel cadmium batteries, nickel hydrogen batteries, nickel zinc batteries, and the like. The operating voltage of such a unit secondary battery cell, in other words, a unit battery cell, is about 2.5V to 4.2V. Therefore, if a higher output voltage is required, a plurality of battery cells may be connected in series to form a battery pack. Also, depending on the charge and discharge capacity required for the battery pack, a plurality of battery cells may be connected in parallel to form a battery pack. Accordingly, the number of battery cells included in the above battery pack may be varied according to the required output voltage or charge/discharge capacity.

For example, when a plurality of battery cells is connected in series/parallel to form a battery pack, a battery module comprising a plurality of battery cells is first constructed.

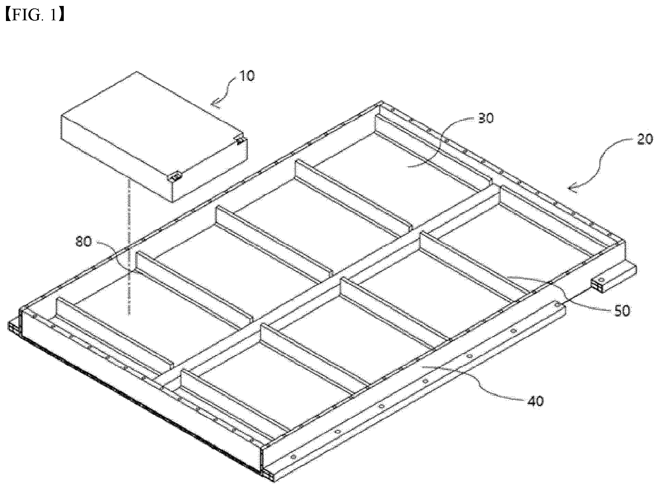

FIG. 1 illustrates a pack case 20 including a conventional battery pack in which cell assemblies 10 are accommodated. The pack case 20 provides a space in which the cell assemblies 10 are each separately accommodated, as shown in FIG. 1. Each cell assembly 10 is supported at a lower portion by a base plate 30 corresponding to the bottom of the pack case 20, supported at a lateral portion by side walls 40 coupled along the rim of the base plate 30, and supported at a lateral portion by a separation wall 50, and can be simultaneously separated.

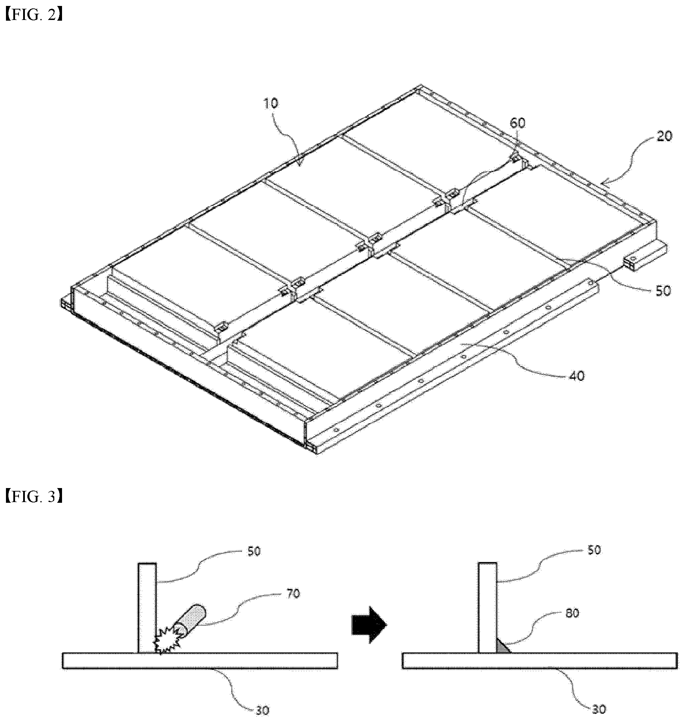

FIG. 2 illustrates a pack case 20 in which cell assemblies 10 are entirely accommodated, and each cell assembly 10 is separated by a separation wall 50. The pack case 20 may further comprise a main wall 60 across the center as shown in FIG. 2, wherein each cell assembly 10 is seated in a space separated by the main wall 60 and the separation wall 50.

Meanwhile, the separation wall 50 is generally coupled to the base plate 30 by welding.

FIG. 3 schematically illustrates the welding of the separation wall 50 and the base plate 30, wherein the edge portion formed by the coupling of the separation wall 50 and the base plate 30 is welded with a welding torch 70. At this time, a welding bead 80 is generated by the welding, and the welding bead 80 is formed at the edge portion of the separation wall 50 and the base plate 30 as shown in FIG. 3.

However, the welding bead 80 formed by the above welding may hinder the seating of the cell assembly 10.

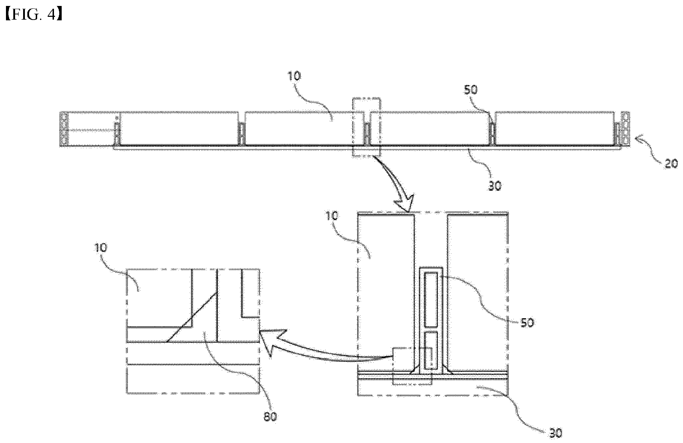

FIG. 4 is a cross-sectional view of the pack case 20 of FIG. 2, wherein, with reference to FIG. 4, welding beads 80 are formed at both ends of the separation wall 50. The welding beads 80 interfere with the edges of the cell assembly 10 when the cell assembly 10 is seated on the base plate 30; in other words, the cell assembly 10 may not be able to be seated fully on the base plate 30 due to bumping into the welding beads 80 during seated positioning.

Conventional approaches to solving the above contact problems have attempted to expand the internal space of the pack case 20. However, such methods not only increase the weight of the battery pack, but also introduce a new problem in that the cell assembly 10 is not appropriately supported by the separation wall 50.

EP 3799151A1 discloses a battery pack with separation walls threaded to a base plate.

CN 213636194 U discloses a battery pack with separation walls threaded to a base plate.

US 2021/351455 discloses a battery pack with separation walls threaded to a base plate.

### [Disclosure]

### [Technical Problem]

Therefore, the present invention is directed to solving the above problems, and to provide a battery pack in which the lateral portions of the cell assembly are appropriately supported, and the internal space is efficiently utilized.

Other objects and advantages of the present invention will be understood from the following description, which will become more apparent from the embodiments of the present invention, and it will be easily understood that the objects and advantages of the present invention may be realized by the means and combinations thereof disclosed in the claims of the patent.

### [Technical Solution]

The present invention provides a battery pack according to claim 1.

The separation wall may include a thread groove at the bottom, and the base plate may include a coupling hole formed through at a location corresponding to the thread groove of the separation wall, and the coupling member may be screwed to the thread groove by penetrating the coupling hole.

The separation wall may include a plurality of thread grooves.

The thread grooves may be formed at predetermined intervals spaced apart along a length direction of the separation wall.

The base plate may extend along a length direction of the pack case, and may include a plurality of cooling passages spaced apart at predetermined intervals therein along a width direction of the pack case.

The coupling member may be inserted between the cooling passages and coupled to the separation wall.

The coupling member may have a length above a break height of the separation wall.

The separation wall further includes a stiffening bar in the inside, and the coupling member may be inserted into a thread groove of the separation wall and coupled to the stiffening bar.

The stiffening bar may be in the form of any one of a circular column and a polygonal column.

The separation wall may comprise a plurality of stiffening bars, each stiffening bar being spaced apart at predetermined intervals along a height direction of the separation wall.

### [Advantageous Effects]

According to the present invention, the efficiency of the internal space of the pack case can be improved.

Further, the safety of the battery pack can be improved by stably supporting a lateral portion of a cell assembly including a plurality of cells.

In addition, even if one of the cell assemblies expands due to thermal runaway phenomenon, deformation and explosion of the thermal runaway cell assembly and other cell assemblies in the surroundings can be minimized.

### [Brief Description of the Drawings]

FIG. 1 illustrates a pack case including a conventional battery pack.
FIG. 2 illustrates a conventional pack case accommodating a cell assembly.
FIG. 3 is a schematic drawing of the welding process of a separation wall and a base plate included in a conventional pack case.
FIG. 4 is a cross-sectional view of the pack case of FIG. 2.
FIG. 5 is a plan view of a pack case including a battery pack according to a first embodiment of the present invention.
FIG. 6 is a bottom view of the pack case of FIG. 5.
FIG. 7 is a bottom perspective view of the pack case of FIG. 5.
FIG. 8 is a cross-sectional view of a portion of a pack case not representing the invention.
FIG. 9 is a cross-sectional view of a portion of a pack case including a battery pack not representing the invention.
FIG. 10 is a cross-sectional view of a portion of a pack case including a battery pack not representing the invention.
FIG. 11 is a cross-sectional view of a portion of a pack case including a battery pack not representing the invention.
FIG. 12 shows a cross-sectional view of a pack case including a battery pack according to a first embodiment (before coupling coupling members).
FIG. 13 is a cross-sectional view of a pack case including a battery pack according to a first embodiment (after coupling coupling members).
FIG. 14 is a perspective view of a stiffening bar inside a separation wall and a coupling member outside the separation wall.
FIG. 15 is a perspective view of a stiffening bar inside the separation wall and a coupling member coupled with the stiffening bar.
FIG. 16 is a schematic drawing of the coupling of the stiffening bar and the coupling member of the separation wall including the battery pack according to a second embodiment of the present invention.

### [Best Mode]

The present invention will now be described in detail with reference to the accompanying drawings.

In addition, in describing the present invention, specific descriptions of related disclosed configurations or functions are omitted where it is considered that such detailed description would obscure the subject matter of the present invention.

The present invention is shown in embodiment to more fully explain the present invention to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present invention relates to a battery pack in which a plurality of cell assemblies are accommodated. More specifically, the battery pack of the present invention is characterized by a base plate supporting the bottom of the cell assemblies and a separation wall interposed between a pair of cell assemblies neighboring to each other such that the cell assemblies are separated, the separation wall is screwed to the base plate by a coupling member.

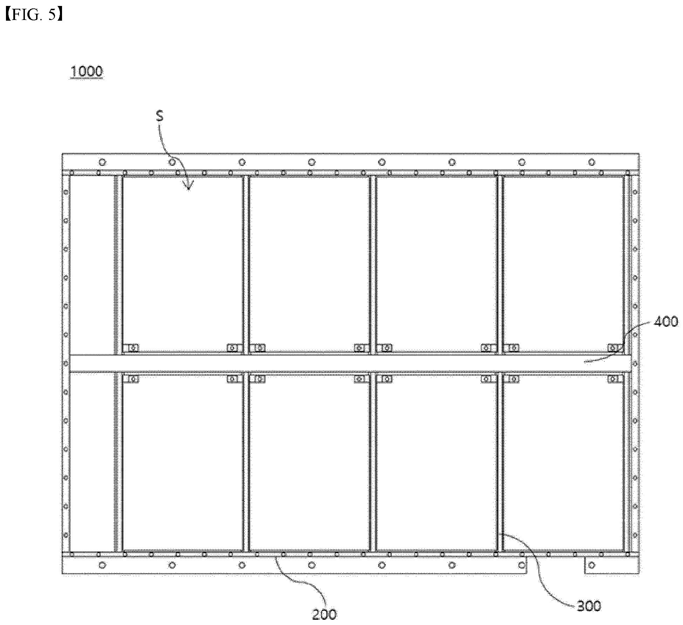

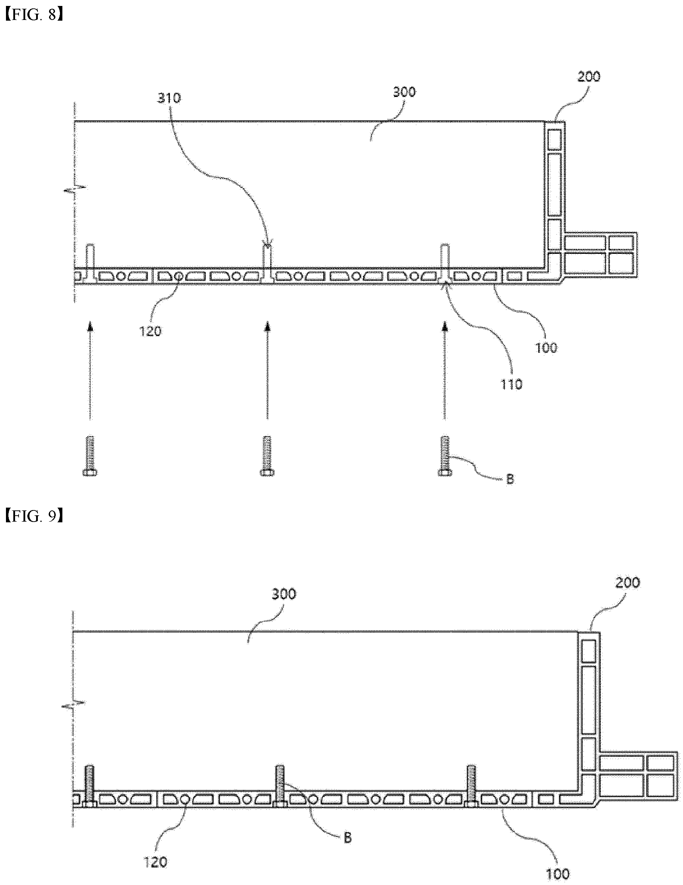

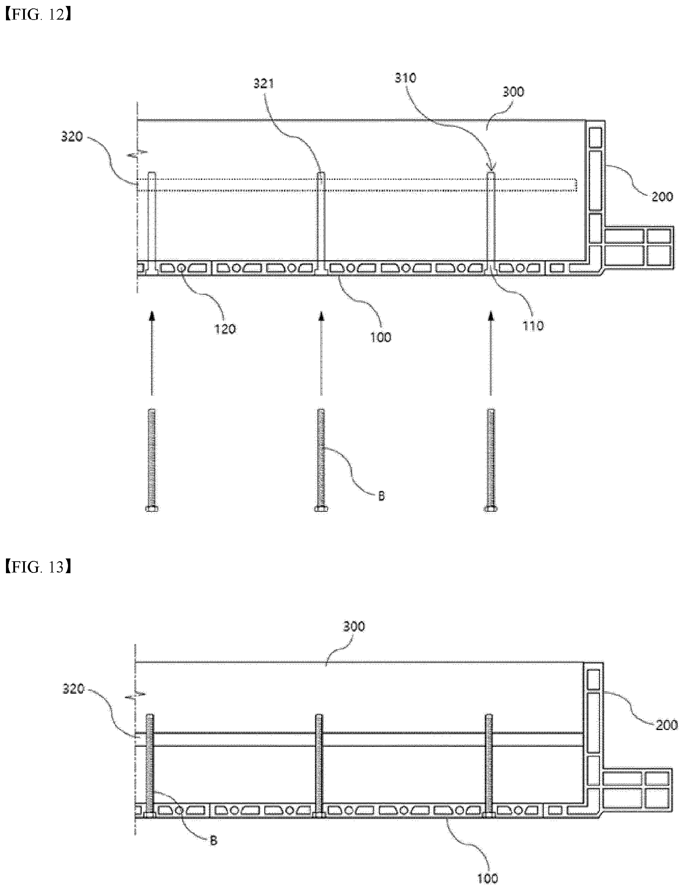

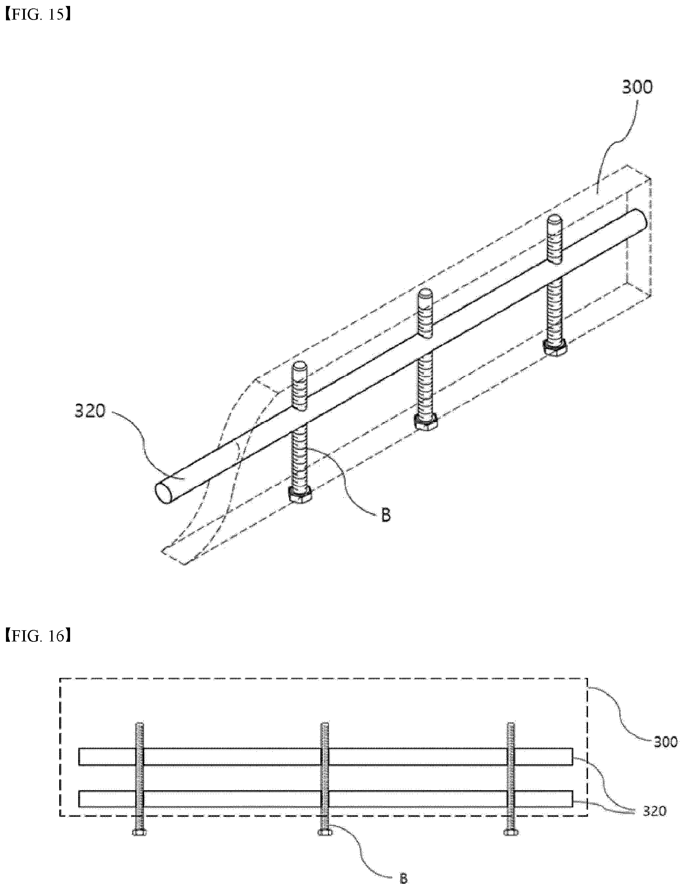

FIGS. 5-7 relate to a battery pack of the present invention, FIGS. 8-11 relate to a not claimed battery pack, FIGS. 12-15 relate to a first embodiment of the present invention and FIG. 16 relate to a second embodiment of the present invention.

Hereinafter, with reference to the following drawings, a battery pack of the present invention according to each embodiment will be described.

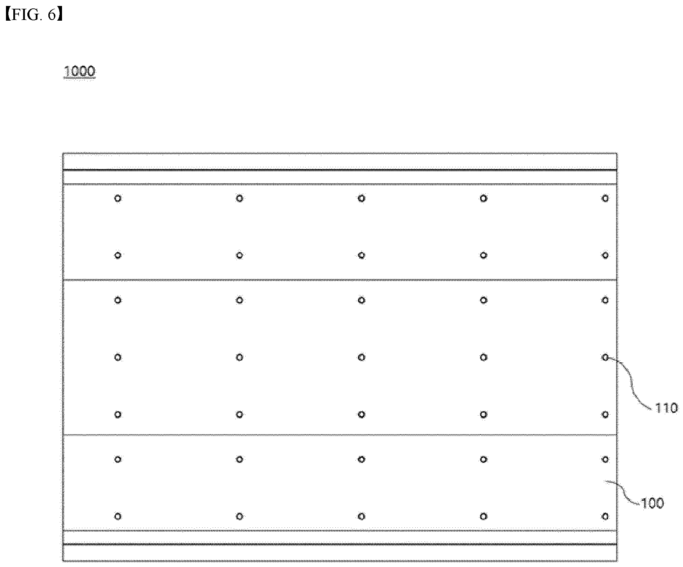

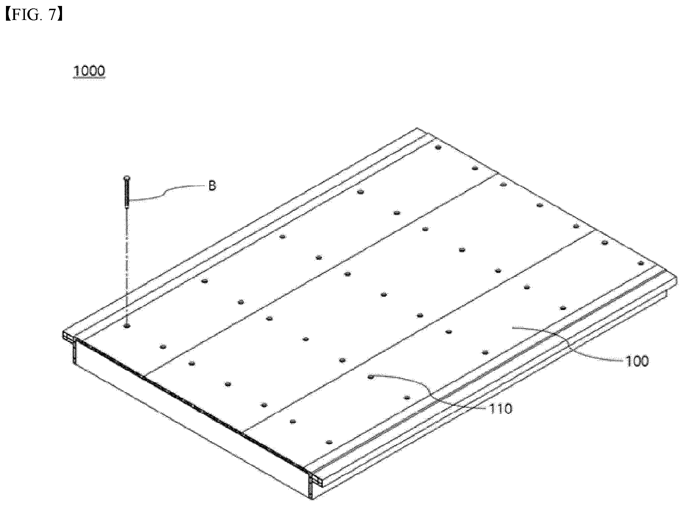

FIG. 5 is a top view of a pack case 1000 included in a battery pack not according to the present invention, FIG. 6 is a bottom view of the pack case 1000 of FIG. 5, and FIG. 7 is a bottom perspective view of the pack case 1000 of FIG. 5.

The battery pack is accommodated with a plurality of cell assemblies S.

The cell assembly S comprises a cell block including a plurality of cells.

The cell comprises an electrode assembly stacked alternately with electrodes and separators including negative and positive electrodes, electrode leads electrically connected to the electrodes, and a cell case enclosing and sealing the electrode assembly such that the electrode leads protrude to the outside.

The cell may be divided into cylindrical cells, prismatic cells and pouch-type cells according to the shape of the electrode assembly and the battery case.

The cylindrical cell wherein the electrode assembly is rolled in the form of a roll and inserted into a cylindrical battery cell case.

The prismatic cell wherein the electrode assembly may be in the form of a stack in which the electrodes and the separator are alternately stacked, and may be in the form of a stack-folding in which the electrodes and the like are provided on a sheet-shaped separator folded at regular intervals.

The prismatic cell wherein the electrode assembly is inserted into a battery cell case in the form of a square box.

The pouch-type cell, wherein the electrode assembly may be in a stacked form, or may be in a stack-folding form.

In the pouch-type cell, said electrode assembly is inserted within a pouch-type battery cell case.

Thus, the cell assembly may include any one of cylindrical cells, prismatic cells, and pouch-type cells.

The cell assembly (S) includes a busbar frame including a plurality of cells and a busbar in electrical connection with electrode leads included in each of the cells.

The cell assembly (S) may further include a module frame surrounding a periphery of the cell block such that each cell is protected from external impact. In this case, the module frame may be provided to support or protect only a portion of the cell block, or may be provided on all exposed portions of the cell block to completely block the cell block from the outside.

The battery pack includes a pack case (1000), which is shaped to enclose and support a lateral portion and a lower portion of the cell assemblies S, and in which the cell assemblies S are directly accommodated. It may also include an upper case coupling with the pack case 1000 to cover an upper portion of each cell assembly S. However, the upper portion of the case is less relevant to the features of the present invention and will not be described.

The pack case 1000 serves to provide a space in which the cell assembly S is seated, and to protect the seated cell assembly S from external impacts and the like.

The pack case 1000 basically includes a base plate 100, a side wall 200, and a separation wall 300.

The base plate 100 serves to support a lower portion of the cell assembly S, and a cooling passage 120 for cooling the cell assembly S may be formed therein as needed.

The side walls 200 serve to support, enclose and protect the lateral portions of the cell assemblies S seated on the base plate 100, and are coupled along the rim of the base plate 100 as shown in FIG. 5.

The separation wall 300 is interposed between a pair of neighboring cell assemblies S such that each cell assembly S is separated and coupled to the base plate 100 as shown in FIG. 5.

The pack case 1000 may further include a main wall 400 extending across the center and coupling to the base plate 100 as shown in FIG. 5.

The main wall 400 serves to separate the cell assemblies S while dividing the internal space of the pack case 1000 into two large compartments.

The main wall 400 may be provided with conductors and busbars or the like therein.

A plurality of cell assemblies S accommodated in the pack case 1000 are seated in respective spaces divided by the separation walls 300 and the main wall 400, as shown in FIG. 5.

The battery pack has the separation wall 300 configured to divide the space inside the pack case 1000 screwed to the base plate 100, in other words, the separation wall 300 is coupled to the base plate 100 by a coupling member B which vertically penetrates the bottom of the base plate 100.

The coupling member B may be a bolt or the like capable of being screwed together, but the present invention does not limit the specific kind thereof.

FIGS. 8 and 9 are cross-sectional views of a portion of a pack case 1000 including a battery pack not according to the present invention. Specifically, FIG. 8 shows the coupling member B before coupling the coupling member B with the separation wall 300, and FIG. 9 shows the coupling member B after coupling the coupling member B with the separation wall 300.

Referring to FIGS. 7 to 9, the separation wall 300 includes a thread groove 310 at its bottom, and the base plate 100 includes a through hole 110 formed at a position corresponding to the thread groove 310 of the separation wall 300. In other words, when the separation wall 300 is firstly coupled with the base plate 100, the thread groove 310 of the separation wall 300 and the coupling hole 110 of the base plate 100 are matched.

The coupling member (B) is screwed by the threaded grooves (310) through the coupling holes (110) to secure the separation wall (300) to the base plate (100).

The separation wall 300 may include a plurality of thread grooves 310, and the base plate 100 includes a plurality of coupling holes 110 corresponding to each of the thread grooves 310.

The plurality of thread grooves 310 may be formed at predetermined intervals spaced apart along the longitudinal direction of the separation wall 300, and the plurality of coupling members B are each in turn coupled along the length direction of the separation wall 300.

When the base plate 100 is provided with cooling passages 120, the cooling passages 120 extend along the length direction of the pack case 1000 and are spaced apart at predetermined intervals along the width direction of the pack case 1000, as shown in FIGS. 8 to 9.

The coupling holes 110 and thread grooves 310 may be positioned and formed to be interposed between the cooling passages 120, and the coupling member B may be inserted between the cooling passages 120 and coupled to the separation wall 300.

The battery pack according to another example is characterized by an elongated length of the coupling member B used to fix the separation wall 300.

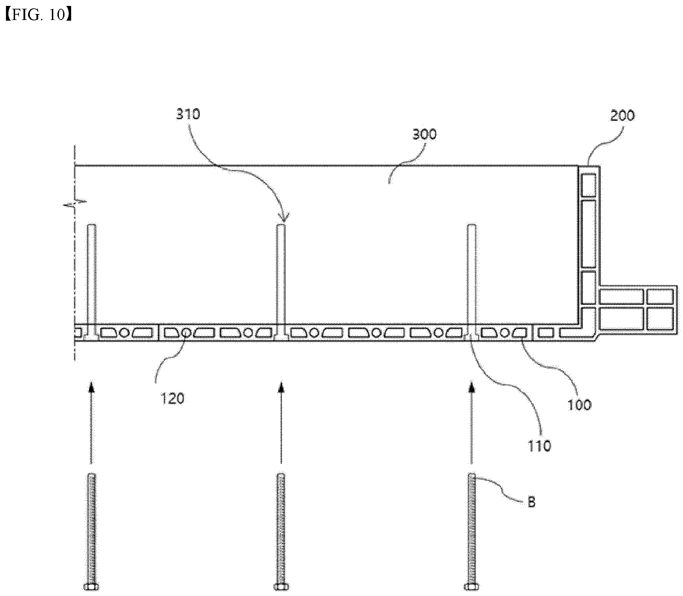

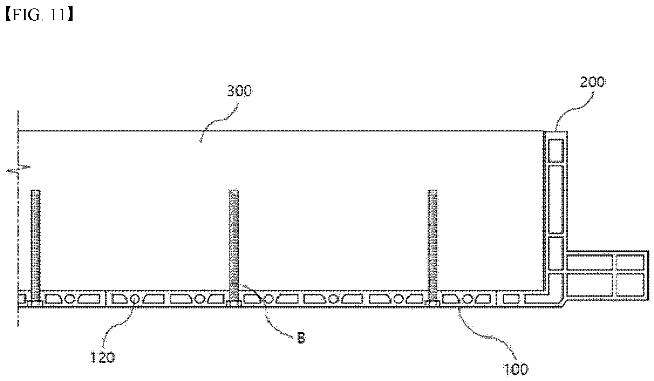

FIGS. 10 and 11 show cross-sections of a portion of the pack case 1000 including the battery pack not according to the present invention. Specifically, FIG. 10 is shown before coupling the coupling member B to the separation wall 300, and FIG. 11 is shown after coupling the coupling member B to the separation wall 300.

The coupling member B is characterized in that the coupling member B has a length of more than the break height of the separation wall (300).

When the long length coupling member B is used, it is inserted above the break height of said separation wall 300, thereby improving the mechanical strength of the separation wall (300), in other words, improving the resistance of the separation wall (300) to external forces acting in the horizontal direction due to the coupling member (B). For example, if the accommodated cell assembly S has a problem and expands, the separation wall 300 and the coupling members B inserted in the separation wall 300 can fully withstand the expansion force transmitted from the cell assembly S.

### (First embodiment)

The battery pack according to a first embodiment of the present invention is characterized in that it further includes a stiffening bar 320 inside the separation wall 300, and the coupling member B is coupled with the stiffening bar 320 so that the mechanical strength of the separation wall 300 is improved. In other words, the battery pack according to the first embodiment is characterized by the addition of a stiffening bar 320 configuration to the coupling member B of the battery pack described higher in the description.

The stiffening bar 320 may be, but is not limited to, steel or the like, and may include any material having high mechanical strength and relatively light weight.

FIGS. 12 and 13 illustrate cross-sectional views of a pack case 1000 including a battery pack according to a first embodiment. Specifically, FIG. 12 illustrates a stiffening bar 320 inside a separation wall 300 and a coupling member B coupling with the stiffening bar 320, while FIG. 13 illustrates the coupling of the stiffening bar 320 of FIG. 12 with the coupling member B.

The separation wall 300 further includes a stiffening bar 320 on its interior as shown in FIGS. 12 and 13, and the coupling member B is inserted into a thread groove 310 of said separation wall 300 to couple with the stiffening bar 320.

The stiffening bar 320 is provided inside the separation wall 300 and extends along the length direction of the separation wall 300, so that when an external force is applied to either side of the separation wall 300, it can be dispersed through the stiffening bar 320. In addition, the separation wall 300 can more effectively resist an external force acted in a horizontal direction through the coupling member B coupled to the stiffening bar 320.

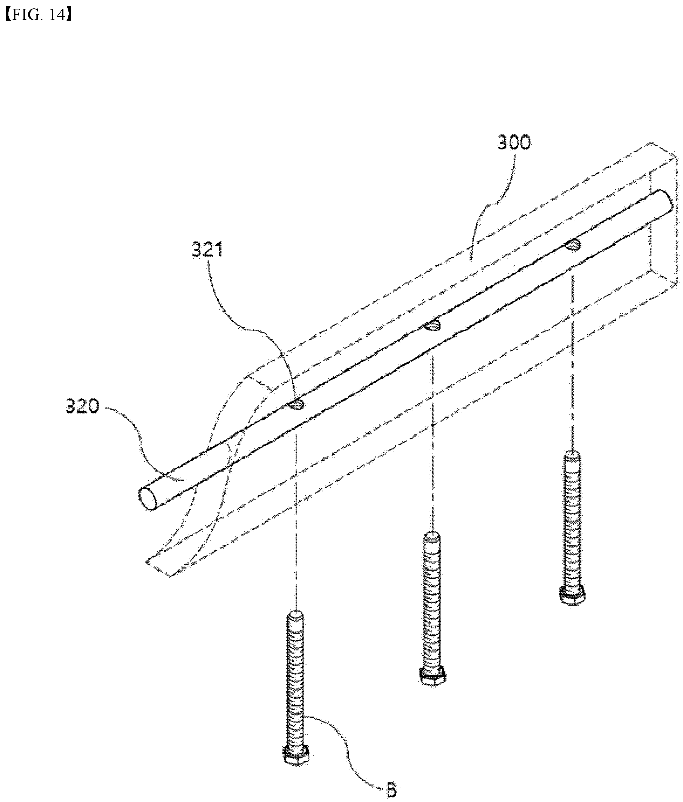

FIG. 14 is a perspective view of a stiffening bar 320 inside the separation wall 300 and a coupling member B outside the separation wall 300, and FIG. 15 is a perspective view of a stiffening bar 320 inside the separation wall 300 and a coupling member B coupled to the stiffening bar 320.

The stiffening bar 320 includes a plurality of stiffening holes 321 formed through and at positions corresponding to the thread grooves 310. Thus, the coupling member B inserted into the thread groove 310 can be coupled with the stiffening bar 320 while passing through the stiffening holes 321 of said stiffening bar 320.

The stiffening bar 320 may be in the form of a circular column as shown in FIGS. 14 and 15, but is not limited thereto and may also be a polygonal column.

### (Second embodiment)

The battery pack according to the second embodiment of the present invention is characterized in that a plurality of the stiffening bars 320 included in the battery pack of the first embodiment are used.

FIG. 16 is a schematic description of the coupling of the stiffening bars 320 and the coupling member B of the separation wall 300 included in the battery pack according to the second embodiment of the present invention.

The separation wall 300 includes a plurality of stiffening bars 320 as shown in FIG. 16, each stiffening bar 320 being spaced apart at predetermined intervals along a height direction of the separation wall 300.

In this case, each of the stiffening bars 320 is positioned such that the coupling member B inserted into the separation wall 300 penetrates all of the stiffening bars 320.

### [Description of Reference Numerals]

10: (conventional art) cell assembly
20: (conventional art) pack case
30: (conventional art) base plate
40: (conventional art) side wall
50: (conventional art) separation wall
60: (conventional art) main wall
70: (conventional art) welding torch
80: (conventional art) welding bead
1000: pack case
100: base plate
110: coupling hole
120: cooling passage
200: side wall
300: separation wall
310: thread groove
320: stiffening bar
321: stiffening hole
400: main wall
S: cell assembly
B: coupling member

## Claims

1. A battery pack accommodating a plurality of cell assemblies (S), comprising:
a pack case (1000) providing a space in which the cell assemblies (S) are seated,
the pack case (1000), comprising:
a base plate (100) supporting a lower portion of the cell assemblies (S); and
a separation wall (300) interposed between a pair of neighboring cell assemblies(S) such that each cell assembly (S) is separated and coupled to the base plate (100),
and the separation wall (300) is coupled to the base plate (100) by a coupling member (B) vertically penetrating the bottom of the base plate (100),
**characterized in that** the separation wall (300) further comprises a stiffening bar (320) in the inside, and the coupling member (B) is inserted into a thread groove (310) of the separation wall (300) and coupled to the stiffening bar (320).

2. The battery pack of claim 1, wherein the separation wall (300) comprises a thread groove (310) at the bottom,
and the base plate (100) comprises a coupling hole (110) formed through at a location corresponding to the thread groove (310) of the separation wall (300), and the coupling member (B) is screwed to the thread groove (310) by penetrating the coupling hole (110).

3. The battery pack of claim 2, wherein the separation wall (300) comprises a plurality of thread grooves (310).

4. The battery pack of claim 3, wherein the thread grooves (310) is formed at predetermined intervals spaced apart along a length direction of the separation wall (300).

5. The battery pack of claim 1, wherein the base plate (100) extends along a length direction of the pack case (1000), and comprises a plurality of cooling passages (120) spaced apart at predetermined intervals therein along a width direction of the pack case (1000).

6. The battery pack of claim 5, wherein the coupling member (B) is inserted between the cooling passages (120) and coupled to the separation wall (300).

7. The battery pack of claim 1, wherein the coupling member (B) has a length above a break height of the separation wall (300).

8. The battery pack of claim 1, wherein the stiffening bar (320) is in the form of any one of a circular column and a polygonal column.

9. The battery pack of claim 1, wherein the separation wall (300) comprises a plurality of stiffening bars (320), each stiffening bar (320) being spaced apart at predetermined intervals along a height direction of the separation wall (300).

## Patentansprüche

1. Batteriepack, das eine Vielzahl von Zellenanordnungen (S) aufnimmt, umfassend:
ein Packgehäuse (1000), das einen Raum bereitstellt, in dem die Zellenanordnungen (S) sitzen,
wobei das Packgehäuse (1000) umfasst:
eine Grundplatte (100), die einen unteren Abschnitt der Zellenanordnungen (S) stützt; und
eine Trennwand (300), die zwischen einem Paar benachbarter Zellenanordnungen (S) so angeordnet ist, dass jede Zellenanordnung (S) getrennt und mit der Grundplatte (100) gekoppelt ist,
und die Trennwand (300) mit der Grundplatte (100) durch ein Kopplungselement (B) gekoppelt ist, das den Boden der Grundplatte (100) vertikal durchdringt,
**dadurch gekennzeichnet, dass** die Trennwand (300) ferner einen Versteifungsstab (320) im Inneren umfasst, und das Kopplungselement (B) in eine Gewindenut (310) der Trennwand (300) eingesetzt und mit dem Versteifungsstab (320) gekoppelt ist.

2. Batteriepack nach Anspruch 1, wobei die Trennwand (300) eine Gewindenut (310) am Boden umfasst,
und die Grundplatte (100) ein Kopplungsloch (110) umfasst, das an einer Stelle durchgehend ausgebildet ist, die der Gewindenut (310) der Trennwand (300) entspricht, und das Kopplungselement (B) durch Durchdringen des Kopplungslochs (110) mit der Gewindenut (310) verschraubt ist.

3. Batteriepack nach Anspruch 2, wobei die Trennwand (300) eine Vielzahl von Gewindenuten (310) umfasst.

4. Batteriepack nach Anspruch 3, wobei die Gewindenuten (310) in vorbestimmten Abständen entlang einer Längsrichtung der Trennwand (300) voneinander beabstandet ausgebildet sind.

5. Batteriepack nach Anspruch 1, wobei sich die Grundplatte (100) entlang einer Längsrichtung des Packgehäuses (1000) erstreckt und eine Vielzahl von Kühlkanälen (120) umfasst, die in vorbestimmten Abständen darin entlang einer Breitenrichtung des Packgehäuses (1000) voneinander beabstandet sind.

6. Batteriepack nach Anspruch 5, wobei das Kopplungselement (B) zwischen den Kühlkanälen (120) eingesetzt und mit der Trennwand (300) gekoppelt ist.

7. Batteriepack nach Anspruch 1, wobei das Kopplungselement (B) eine Länge aufweist, die über einer Bruchhöhe der Trennwand (300) liegt.

8. Batteriepack nach Anspruch 1, wobei der Versteifungsstab (320) in Form einer kreisförmigen Säule oder einer polygonalen Säule vorliegt.

9. Batteriepack nach Anspruch 1, wobei die Trennwand (300) eine Vielzahl von Versteifungsstäben (320) umfasst, wobei jeder Versteifungsstab (320) in vorbestimmten Abständen entlang einer Höhenrichtung der Trennwand (300) beabstandet ist.

## Revendications

1. Bloc-batterie logeant une pluralité d'ensembles de cellules (S), comprenant :
un boîtier de bloc (1000) fournissant un espace dans lequel les ensembles de cellules (S) sont logés,
le boîtier de bloc (1000), comprenant :
une plaque de base (100) supportant une partie inférieure des ensembles de cellules (S) ; et
une paroi de séparation (300) interposée entre une paire d'ensembles de cellules (S) voisins de telle sorte que chaque ensemble de cellules (S) est séparé et couplé à la plaque de base (100),
et la paroi de séparation (300) est couplée à la plaque de base (100) par un élément de couplage (B) pénétrant verticalement le fond de la plaque de base (100),
**caractérisé en ce que** la paroi de séparation (300) comprend en outre une barre de renfort (320) à l'intérieur, et l'élément de couplage (B) est inséré dans une rainure filetée (310) de la paroi de séparation (300) et couplé à la barre de renfort (320).

2. Bloc-batterie selon la revendication 1, dans lequel la paroi de séparation (300) comprend une rainure filetée (310) au niveau du fond,
et la plaque de base (100) comprend un trou de couplage (110) formé à travers un emplacement correspondant à la rainure filetée (310) de la paroi de séparation (300), et l'élément de couplage (B) est vissé à la rainure filetée (310) en pénétrant dans le trou de couplage (110).

3. Bloc-batterie selon la revendication 2, dans lequel la paroi de séparation (300) comprend une pluralité de rainures filetées (310).

4. Bloc-batterie selon la revendication 3, dans lequel les rainures filetées (310) sont formées à des intervalles prédéterminés espacés le long d'une direction de la longueur de la paroi de séparation (300).

5. Bloc-batterie selon la revendication 1, dans lequel la plaque de base (100) s'étend le long d'une direction de la longueur du boîtier de bloc (1000), et comprend une pluralité de passages de refroidissement (120) espacés les uns des autres à des intervalles prédéterminés à l'intérieur de celle-ci le long d'une direction de la largeur du boîtier de bloc (1000).

6. Bloc-batterie selon la revendication 5, dans lequel l'élément de couplage (B) est inséré entre les passages de refroidissement (120) et couplé à la paroi de séparation (300).

7. Bloc-batterie selon la revendication 1, dans lequel l'élément de couplage (B) a une longueur supérieure à une hauteur de rupture de la paroi de séparation (300).

8. Bloc-batterie selon la revendication 1, dans lequel la barre de renfort (320) se présente sous la forme de l'une quelconque d'une colonne circulaire et d'une colonne polygonale.

9. Bloc-batterie selon la revendication 1, dans lequel la paroi de séparation (300) comprend une pluralité de barres de renfort (320), chaque barre de renfort (320) étant espacée à des intervalles prédéterminés le long d'une direction de la hauteur de la paroi de séparation (300).
